# EUROPÄISCHE PATENTSCHRIFT

(11) **EP 2 114 629 B1**
(45) Veröffentlichungstag und Bekanntmachung des Hinweises auf die Patenterteilung: **12.09.2018**
(21) Anmeldenummer: 08707042.1
(22) Anmeldetag: 15.01.2008
(51) Int. Cl.: B25J 9/16

(54) **VERFAHREN ZUR SICHERUNG EINES HANDHABUNGSGERÄTS**
METHOD FOR SECURING A HANDLING DEVICE
PROCÉDÉ DE SÉCURISATION D'UN APPAREIL DE MANIPULATION

(30) Priorität: 10.02.2007 DE 102007006708
(43) Veröffentlichungstag der Anmeldung: 11.11.2009
(73) Patentinhaber: Abb Research Ltd., 8050 Zürich (CH)
(72) Erfinder: MATTHIAS, Björn, 76669 Bad Schönborn (DE); KRIEGER, Roland, 68526 Ladenburg (DE)
(74) Vertreter: Marks, Frank
(86) Internationale Anmeldenummer: PCT/EP2008/000239
(87) Internationale Veröffentlichungsnummer: WO 2008/095581

(56) Entgegenhaltungen:
- EP-A- 0 927 612
- EP-B- 1 035 953

## Beschreibung

Die Erfindung betrifft ein Verfahren zur Sicherung eines Handhabungsgeräts, das mindestens einen bewegten Bestandteil aufweist. Der Begriff Handhabungsgerät umfasst in diesem Zusammenhang insbesondere Roboter, beispielsweise Industrieroboter. Ein Roboter ist ein automatisch gesteuertes, wiederprogrammierbares, vielfach einsetzbares Handhabungsgerät mit mehreren Freiheitsgraden, das entweder ortsfest oder beweglich in automatisierten Fertigungssystemen eingesetzt wird. Industrieroboter sind für den Einsatz im industriellen Umfeld konzipiert (zum Beispiel für die automobile Fertigung). Sie können innerhalb produzierender Betriebe die unterschiedlichsten Handhabungsschritte durchführen, wobei sie mit teuren Werkzeugen wertvolle Produkte bearbeiten. Häufig arbeiten die Industrieroboter gleichzeitig mit weiteren Industrierobotern oder mit Menschen an einem Produkt. Zur Vermeidung von Kollisionen zwischen Robotern untereinander oder zwischen Robotern und Menschen sind in überlappenden Arbeitsbereichen Sicherheitsvorkehrungen erforderlich.

Im Stand der Technik sind diverse Sicherheitsvorkehrungen für Handhabungsgeräte bekannt, zum Beispiel eine Begrenzung der Achsgeschwindigkeit durch Software, eine Begrenzung der Geschwindigkeiten durch Limitierung der Zwischenkreisspannung, eine Überwachung der Geschwindigkeit und/oder der Position über mehrere redundante Überwachungskanäle, eine Kollisionsüberwachung durch Überwachung der Antriebsmomente über die Motorströme, eine Kollisionsüberwachung durch separate Sensorik, zum Beispiel zur Feststellung der Annäherung an Hindernisse (kapazitiv, induktiv, Ultraschall, visuell) oder von Berührungskräften (Kraft- oder Druckmesseinrichtungen basierend auf verschiedenen physikalischen Prinzipien) oder Ausschluss eines Eintretens einer Person oder eines Objekts in bestimmte Teile des Arbeitsraums durch mechanische Anschläge oder durch Software.

US 2005/0273200 beschreibt ein Verfahren zum Schützen von Robotern vor Kollisionen. Dazu werden Bewegungen der Roboter automatisch auf mögliche Kollisionen geprüft, indem die Roboterprogramme vor deren Ausführung auf Kollisionspotentiale hin überprüft werden. Falls notwendig, werden automatisch Verriegelungen in den Bewegungsablauf eingefügt.

US 6,678,582 B2 bezieht sich auf ein Verfahren zum Vermeiden von Kollisionen zwischen einem Roboter und wenigstens einem anderen Objekt. Das Verfahren beinhaltet das Vorhersagen einer Konfiguration einer Bewegungsbahn des Roboters bei einer Anhaltezeit und das Überprüfen der vorgesagten Konfiguration hinsichtlich Behinderungen von Teilen des Roboters durch Teile der anderen Objekte und das Anhalten des Roboters und/oder der anderen Objekte im Falle einer drohenden Kollision.

US 6,212,444 B1 betrifft ein Verfahren zur Vermeidung einer Behinderung eines Industrieroboters durch eine mit diesem zusammenarbeitende Vorrichtung, wobei der Roboter und die Vorrichtung Eingangsverbotssignale ausgeben, um einen gleichzeitigen Eintritt in einen gemeinsamen Arbeitsbereich zu verhindern.

US 7,086,293 B2 hat ein Verfahren zum Überwachen eines Roboters zum Gegenstand. Dabei werden unterschiedliche Messgrößen, insbesondere Materialspannungen an Teilen des Roboters, erfasst und miteinander verglichen.

Zur Gewährleistung der Sicherheit von Menschen in der Nähe von Handhabungsgeräten werden üblicherweise trennende Schutzeinrichtungen, zum Beispiel Sicherheitstüren, verwendet.

DE 202 15 648 U1 bezieht sich beispielsweise auf eine Schutzeinrichtung für eine Roboteranlage.

EP 0 264 350 A1 betrifft eine prozessgesteuerte Anlage mit einem Roboter und einem Sicherheitskreis. Die Anlage enthält eine mit dem Roboter und dem Sicherheitskreis zusammenwirkende Überwachungsschaltung, welche den Schleichbetrieb oder den Stillstand des Roboters überwacht, wenn sich eine Bedienperson im Nahbereich des Roboters befindet.

US 7,031,807 B2 hat ein Verfahren zur Sicherung von Robotern zum Gegenstand, wobei der Roboter im Falle einer Kollision mit einer Person oder einem Objekt gestoppt wird oder eine entgegengesetzte Bewegung ausführt.

DE 101 52 543 A1 bezieht sich auf ein Verfahren, bei dem eine sicherheitsrelevante Funktion ausgelöst wird, wenn eine Person in einen Gefahrenbereich eindringt, der in einem Sicherheitsabstand zu einer Maschine variabel definiert ist.

DE 10 2004 041 821 A1 betrifft eine Vorrichtung zur Sicherung eines Handhabungsgeräts bei dem ein sicherheitsrelevanter Teil des Arbeitsraums des Handhabungsgeräts durch Detektionsbereiche von Näherungssensoren erfasst wird.

EP 0 927 612 A1 zeigt eine Roboter-Steuervorrichtung zum Steuern eines Roboters, der durch eine Anzahl von Roboterachsen gemäß einem Bewegungsprogramm angetrieben wird, umfassend eine Vorrichtung zum Erzeugen eines Fehlbewegungserfassungsindexes zum Erfassen einer anormalen Bewegung eines Punktes, der eine Position des Roboters im Raum veranschaulicht, und zwar auf der Basis der aktuellen Positionsdaten der Roboterachsen, die von Ausgängen von Positionsdetektoren für die Roboterachsen erhalten werden, während der Roboter in Bewegung ist, und eine Bestimmungsvorrichtung zum Vergleichen des Fehlbewegungserfassungsindexes mit einer festgelegten Fehlbewegungserfassungsreferenz, und zum Bestimmen einer anormalen Bewegung, wenn der Fehlbewegungserfassungsindex größer ist als die festgelegte Fehlbewegungserfassungsreferenz.

Vor dem Hintergrund des vorbekannten Standes der Technik ist es Aufgabe der Erfindung die Nachteile des Standes der Technik zu vermeiden und ein Verfahren zur Sicherung eines Handhabungsgeräts bereitzustellen, mit dem insbesondere die Sicherheit einer Bedienperson in Bezug auf Kollisionen mit bewegten Bestandteilen des Handhabungsgeräts gewährleistet ist.

Diese Aufgabe wird erfindungsgemäß gelöst durch ein Verfahren zur Sicherung eines Handhabungsgeräts, umfassend ein Überwachen einer Bewegungsrichtung eines bewegten Bestandteils des Handhabungsgeräts, mit den Schritten:
- Ermitteln eines die aktuelle Bewegungsrichtung des bewegten Bestandteils darstellenden Bewegungsvektors, der eine bestimmte Richtung aufweist und
- Vergleichen der Richtung des Bewegungsvektors mit der Richtung eines Referenzvektors zur Bestimmung einer Abweichung,
wobei eine sicherheitsrelevante Funktion ausgelöst wird, wenn die Abweichung (zwischen der Richtung des Bewegungsvektors und der Richtung des Referenzvektors) außerhalb eines definierten Bereichs liegt, wobei der Referenzvektor in Abhängigkeit von mindestens einer der Größen, ausgewählt aus der Gruppe Position des bewegten Bestandteils, Geschwindigkeit des bewegten Bestandteils, Signale einer speicherprogrammierbaren Steuerung und Signale eines sicherheitsrelevanten Systems, definiert ist.

Ein bewegter Bestandteil eines Industrieroboters ist ein Bestandteil, beispielsweise ein Effektor (Werkzeug, Greifer etc.) oder ein Gelenk eines Roboterarms, die im Betrieb des Industrieroboters innerhalb eines bestimmten Arbeitsraumes gesteuert durch die Robotersteuerung bewegt werden können.

Zur Sicherung des Handhabungsgeräts wird bei der vorliegenden Erfindung die Bewegungsrichtung des bewegten Bestandteils überwacht. Dazu wird jeweils ein Bewegungsvektor ermittelt, der die aktuelle Bewegungsrichtung des bewegten Bestandteils darstellt. Der Bewegungsvektor weist insbesondere in eine bestimmte Richtung innerhalb des Arbeitsraums, die für die aktuelle Bewegungsrichtung des bewegten Bestandteils steht. Zum Ermitteln des Bewegungsvektors kann zum Beispiel auf Überwachungsfunktionen zurückgegriffen werden, die bereits bei Handhabungsgeräten im Stand der Technik vorgesehen sind. Beispielsweise ist die Überwachung der Positionen des TCP (Tool Center Point), der Gelenkreichweite, der TCP-Geschwindigkeit und der Gelenkgeschwindigkeit bei Industrierobotern im Stand der Technik bekannt (zum Beispiel aus US 4,771,222, US 5,194,792 oder US 6,345,213 B1). Als TCP wird ein Referenzpunkt des Effektors bezeichnet, von dem aus das Werkzeugkoordinatensystem angegeben wird (zum Beispiel Mittelpunkt eines Greifers, Spitze einer Düse beim Beschichten). Zum Ermitteln des die aktuelle Bewegungsrichtung des bewegten Bestandteils darstellenden Bewegungsvektors können bei dem erfindungsgemäßen Verfahren beispielsweise mindestens zwei ermittelte TCP- oder Gelenkpositionen herangezogen werden. Wenn die Positionen zum Beispiel mit einer konstanten Rate ermittelt werden, kann der aktuelle Bewegungsvektor aus der letzten und der aktuellen TCP- oder Gelenkposition berechnet werden. Gemäß einer bevorzugten Ausführungsform des erfindungsgemäßen Verfahrens wird der Bewegungsvektor aus zwei nacheinander bestimmten Positionswerten des bewegten Bestandteils des Handhabungsgeräts ermittelt.

Erfindungsgemäß wird die Richtung des Bewegungsvektors mit der Richtung eines Referenzvektors verglichen, um eine Abweichung zu bestimmen. Insbesondere handelt es sich bei der Abweichung um die Differenz der Winkel in einer Ebene oder der Raumwinkel der zwei Vektoren. Die Richtung des Referenzvektors wird vorzugsweise anwendungsspezifisch definiert. Gemäß einer bevorzugten Ausführungsform der vorliegenden Erfindung weist der Referenzvektor in eine von einer Sicherheitszone wegzeigende Richtung, wobei eine Zone als Sicherheitszone definiert ist, in der sich eine Person bei der Bedienung des Handhabungsgeräts oder bei der Bearbeitung eines Produkts aufhält. Es kann jedoch auch ein beliebiger anderer Referenzvektor definiert werden, um eine Bezugsrichtung zur Bestimmung der Abweichung vorzugeben.

Erfindungsgemäß wird eine sicherheitsrelevante Funktion ausgelöst, wenn die Abweichung der Richtung des Bewegungsvektors von der Richtung des Referenzvektors außerhalb eines definierten Bereichs liegt. Eine sicherheitsrelevante Funktion ist eine Funktion des Handhabungsgeräts, die die Sicherheit eines Objekts oder einer Person in Bezug auf eine Kollision mit dem bewegten Bestandteil des Handhabungsgeräts erhöht. Besonders bevorzugt wird bei der vorliegenden Erfindung als sicherheitsrelevante Funktion ein Stoppen des bewegten Bestandteils oder ein Einstellen oder Begrenzen einer Geschwindigkeit des bewegten Bestandteils ausgelöst. Durch das Stoppen des bewegten Bestandteils wird seine Weiterbewegung in der aktuellen Bewegungsrichtung nicht zugelassen. Das Einstellen oder Begrenzen einer Geschwindigkeit des bewegten Bestandteils kann die Geschwindigkeit in der aktuellen Bewegungsrichtung oder eine Geschwindigkeitskomponente (zum Beispiel eine Geschwindigkeitskomponente, die auf eine Sicherheitszone zu gerichtet ist) betreffen. Beispielsweise kann lediglich eine langsame Geschwindigkeit in Richtung zu einer Sicherheitszone hin, eine mittlere Geschwindigkeit parallel zu der Sicherheitszone und eine schnelle Geschwindigkeit von der Sicherheitszone weg zugelassen werden.

Die Kombination von Bewegungsrichtungsüberwachung und Geschwindigkeitsüberwachung stellt ein wirkungsvolles Instrument zur Erhöhung der Sicherheit zum Beispiel von kraftgeführten Robotern dar. Der Roboter kann zum Beispiel so überwacht werden, dass er sich nur mit einer geringen Geschwindigkeit auf einen Mensch zu, mit einer etwas höheren Geschwindigkeit parallel zu dem Menschen und mit noch höherer Geschwindigkeit von dem Menschen weg bewegt.

Der Abweichungsbereich, in dem das Auslösen einer sicherheitsrelevanten Funktion erfolgt, kann beispielsweise durch zwei von dem Referenzvektor aus definierte Grenzwinkel begrenzt sein. Vorzugsweise wird eine Bewegung des bewegten Bestandteils gestoppt, wenn zwischen dem Bewegungsvektor und dem Referenzvektor ein Winkel vorliegt, der einen definierten Grenzwinkel überschreitet. Der jeweilige Grenzwinkel kann dabei als Funktion mindestens einer der Größen ausgewählt aus der Gruppe Position des bewegten Bestandteils, Geschwindigkeit des bewegten Bestandteils, Signale einer speicherprogrammierbaren Steuerung und Signale eines sicherheitsrelevanten Systems definiert sein. Vorzugsweise entspricht der definierte Bereich der Abweichung, in dem das Auslösen einer sicherheitsrelevanten Funktion erfolgt, einem Bereich, in dem die Bewegungsrichtung des bewegten Bestandteils einer Bewegung auf eine Sicherheitszone zu entspricht. Es können auch mehrere Bereiche für die Abweichung definiert werden, in denen verschiedene sicherheitsrelevante Funktionen ausgelöst werden. Die mehreren Bereiche können dabei zum Beispiel ohne Überlappung oder miteinander überlappend definiert werden. Gemäß einer Variante der vorliegenden Erfindung sind mehrere Bereiche für die Abweichung definiert, wobei eine Geschwindigkeit des bewegten Bestandteils in Abhängigkeit von dem Bereich, in der die Abweichung liegt, eingestellt oder begrenzt wird.

Das erfindungsgemäße Verfahren ist insbesondere vorteilhaft für eine Vielzahl von Anwendungen, in denen die exakten kartesischen TCP- oder Gelenkpositionen oder die Bewegungsbahnen eines bewegten Bestandteils eines Handhabungsgeräts nicht vorhergesagt werden können, zum Beispiel wenn die Bewegung von einem Sensorinput oder von sich ändernden Prozessparametern abhängt. In diesem Fall kann es schwierig oder sogar unmöglich sein, das Handhabungsgerät in Bezug auf ortsfeste kartesische Zonen zu überwachen. Eine Bewegungsrichtungsüberwachung gemäß der Erfindung liefert hingegen die Information, ob der bewegte Bestandteil auf eine Sicherheitszone (und einen sich darin gegebenenfalls aufhaltenden Menschen) zu oder von dieser weg bewegt wird.

Ferner können aufgrund der erfindungsgemäßen Überwachung der Bewegungsrichtung des bewegten Bestandteils die Größen von Sicherheitszonen, in die der Roboter nicht eindringen darf (zum Beispiel in der Umgebung von Personen) in Abhängigkeit von der Bewegungsrichtung des bewegten Bestandteils reduziert werden.

Gemäß einer bevorzugten Ausführungsform der vorliegenden Erfindung ist der Bereich und/oder der Referenzwinkel in Abhängigkeit von mindestens einer der Größen ausgewählt aus der Gruppe Position des bewegten Bestandteils, Geschwindigkeit des bewegten Bestandteils, Signale einer speicherprogrammierbaren Steuerung und Signale eines sicherheitsrelevanten Systems definiert. Dies erlaubt eine dynamische Überwachung der Bewegungsrichtung. Beispielsweise können der definierte Bereich der Abweichung der Richtung des Bewegungsvektors von der Richtung des Referenzvektors (in dem das Auslösen einer sicherheitsrelevanten Funktion erfolgt) und/oder die Richtung des Referenzvektors so definiert werden, dass sie, wenn die Bewegungsrichtung des bewegten Bestandteils auf die Sicherheitszone zuweist, im Falle einer Position des bewegten Bestandteils an einem Ort in der Nähe einer Sicherheitszone das Auslösen einer sicherheitsrelevanten Funktion sicherstellen und an einem Ort weiter entfernt von der Sicherheitszone kein Auslösen einer sicherheitsrelevanten Funktion bewirken.

Eine speicherprogrammierbare Steuerung (SPS, englisch: Programmable Logic Controller, PLC) ist eine elektronische Baugruppe, die in der Automatisierungstechnik für Steuerungs- und Regelungsaufgaben eingesetzt wird. Es handelt sich um eine Vorrichtung mit Eingabe- und Ausgabeschnittstellen, über die mittels Sensoren und Aktoren Fertigungsprozesse eines Handhabungsgeräts gesteuert, überwacht und beeinflusst werden können.

Sicherheitsrelevante Systeme sind beispielsweise trennende Schutzeinrichtungen, wie Schutztüren oder Schutzgatter, die Signale über ihren Zustand (offen oder geschlossen) mittels eines Schalters übermitteln oder Lichtschranken, die bei Unterbrechung des Strahlenganges Signale weiterleiten.

Gemäß einer Ausführungsform der vorliegenden Erfindung bewegt sich der bewegte Bestandteil in einem Arbeitsraum, der in Zonen eingeteilt wird, wobei die sicherheitsrelevante Funktion von der Zone abhängt, in der sich der bewegte Bestandteil befindet. Wenn die Abweichung der Richtung des Bewegungsvektors von der Richtung des Referenzvektors beispielsweise in einem definierten Bereich liegt, so kann in einer Zone als sicherheitsrelevante Funktion die Geschwindigkeit des bewegten Bestandteils limitiert werden und in einer anderen Zone als sicherheitsrelevante Funktion die Bewegung des bewegten Bestandteils gestoppt werden. Vorzugsweise wird in einer an eine Sicherheitszone angrenzenden Zone eine Bewegung des bewegten Bestandteils
- mit hoher Geschwindigkeit gestoppt,
- mit einer mittleren Geschwindigkeit gestoppt, außer wenn sich der bewegte Bestandteil in einer Bewegungsrichtung von der Sicherheitszone weg bewegt und
- mit einer niedrigen Geschwindigkeit in allen Bewegungsrichtungen zugelassen.

Gemäß einer weiteren bevorzugten Variante der vorliegenden Erfindung wird in einer Zone (z.B. eine weiter von einer Sicherheitszone entfernten Zone) eine Bewegung des bewegten Bestandteils
- mit einer hohen Geschwindigkeit gestoppt, außer wenn sich der bewegte Bestandteil in einer Bewegungsrichtung zu der Sicherheitszone bewegt und
- mit einer mittleren oder niedrigen Geschwindigkeit in allen Bewegungsrichtungen zugelassen.

Eine hohe Geschwindigkeit ist in diesem Zusammenhang vorzugsweise eine Geschwindigkeit > 500 mm/s. Eine mittlere Geschwindigkeit ist vorzugsweise eine Geschwindigkeit zwischen 250 und 500 mm/s. Eine niedrige Geschwindigkeit ist vorzugsweise eine Geschwindigkeit ≤ 250 mm/s.

Eine bevorzugte Ausführungsform der vorliegenden Erfindung besteht darin, dass sich der bewegte Bestandteil in einem Arbeitsraum bewegt, der in Zonen eingeteilt wird, wobei das Überwachen der Bewegungsrichtung des bewegten Bestandteils nur dann erfolgt, wenn sich der Bestandteil in einer oder mehreren bestimmten Zonen befindet. Die Bewegungsrichtungsüberwachung kann somit auf Zonen beschränkt werden, die für die Sicherheit kritisch sind (insbesondere in denen Kollisionspotential besteht).

Gemäß einer bevorzugten Ausführungsform der vorliegenden Erfindung erfolgt das Überwachen des bewegten Bestandteils nur dann, wenn sich der bewegte Bestandteil an definierten Positionen befindet und/oder definierte Geschwindigkeiten aufweist und/oder wenn definierte Signale einer speicherprogrammierbaren Steuerung und/oder eines sicherheitsrelevanten Systems vorliegen. Somit kann die Überwachung auf Situationen beschränkt werden, in denen ein erhöhtes Sicherheitsrisiko besteht (so zum Beispiel wenn sich der bewegte Bestandteil in der Nähe eines Aufenthaltsbereichs von Personen befindet, wenn der bewegte Bestandteil mit einer hohen Geschwindigkeit bewegt wird und/oder wenn ein Sicherheitsgatter geöffnet ist).

Das erfindungsgemäße Verfahren wird vorzugsweise für die Sicherung eines Handhabungsgeräts eingesetzt, das ein sensorgeführter Roboter ist. Sensorgeführte Roboter umfassen eine Robotersteuerung, die mit Schnittstellen ausgerüstet ist, um Informationen von Sensoren des Roboters aufzunehmen und die Bewegungsabläufe des Roboters in Abhängigkeit von der Sensorinformation zu koordinieren. Ein Beispiel für einen sensorgeführten Roboter ist ein kraftgeführter Roboter, der auf Bestandteile des Roboters wirkende Kräfte mittels Sensoren erfasst und die Bewegung des Roboters in Abhängigkeit von den Signalen dieser Sensoren steuert.

Die vorliegende Erfindung bezieht sich ferner auf eine Vorrichtung zur Sicherung eines Handhabungsgeräts, umfassend eine Überwachungseinrichtung zum Überwachen einer Bewegungsrichtung eines bewegten Bestandteils des Handhabungsgeräts, wobei die Überwachungseinrichtung eine Vergleichseinrichtung umfasst, um eine Richtung eines ermittelten Bewegungsvektors, der die aktuelle Bewegungsrichtung des bewegten Bestandteils darstellt, mit einer Richtung eines Referenzvektors zur Bestimmung einer Abweichung zu vergleichen, und wobei die Überwachungseinrichtung eine Sicherheitssteuerung umfasst, um eine sicherheitsrelevante Funktion auszulösen, wenn die Abweichung in einem definierten Bereich liegt. Die erfindungsgemäße Vorrichtung dient vorzugsweise zur Durchführung des erfindungsgemäßen Verfahrens.

Die Erfindung wird anhand der Zeichnung nachstehend näher erläutert.

Es zeigt:
- Figur 1: schematisch den Ablauf eines erfindungsgemäßen Verfahrens gemäß einer ersten bevorzugten Ausführungsform,
- Figur 2: schematisch den Ablauf eines erfindungsgemäßen Verfahrens gemäß einer zweiten bevorzugten Ausführungsform und
- Figur 3: schematisch den Ablauf eines erfindungsgemäßen Verfahrens gemäß einer dritten bevorzugten Ausführungsform.

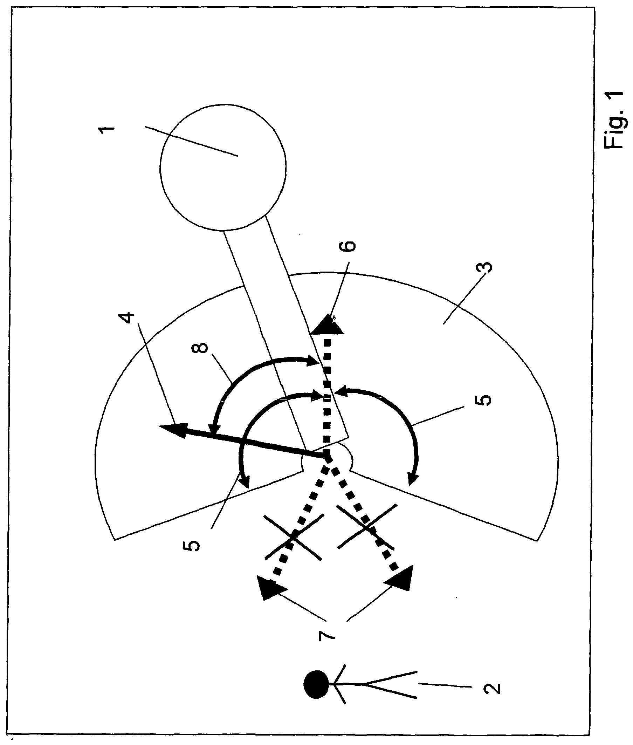

Figur 1 zeigt eine erste Ausführungsform eines erfindungsgemäßen Verfahrens.

Die Bewegungsrichtungsüberwachung wird als Überwachung eines Vektors (Bewegungsvektor 4, der die aktuelle Bewegungsrichtung des bewegten Bestandteils eines Handhabungsgeräts 1 angibt) durchgeführt, wobei nur bestimmte Richtungen des Vektors zugelassen sind.

Zur Durchführung der Überwachung werden drei Schritte durchgeführt:
1. Bestimmung der Richtung des Bewegungsvektors 4:
   Die kartesischen Koordinaten eines TCP oder eines Gelenks 1 werden mittels (nicht dargestellter) geeigneter Sensoren erfasst. Ausgehend von mindestens zwei TCP-/Gelenk-Positionen wird die Richtung des Bewegungsvektors 4 (aktuelle Bewegungsrichtung) abgeleitet. Die Positionen werden mit einer konstanten Rate erfasst, so dass die Richtung des Bewegungsvektors 4 aus der letzten und der aktuellen Position ermittelt werden kann. Die Länge des so ermittelten Bewegungsvektors 4 ist direkt proportional zu der Geschwindigkeit des TCP/Gelenks 1.
2. Konfigurieren/Definieren erlaubter und verbotener Bewegungsrichtungen:
   Es wird ein Referenzvektor 6 definiert. Des Weiteren wird ein Bereich einer erlaubten Abweichung in Grad und ein Bereich einer verbotenen Abweichung in Grad definiert. In dem dargestellten Fall umfasst der Bereich 5 der erlaubten Abweichung die Winkel zwischen 0° und ca. 110° und zwischen ca. 250° und 360°. Der Bereich der verbotenen Abweichung umfasst in diesem Fall alle Winkel, die keine Winkel der erlaubten Abweichung 5 sind. In den dargestellten Beispielen ist dies der verbotene Abweichungsbereich von ca. 110 bis ca. 250°. Dadurch wird einerseits eine Menge erlaubter Bewegungsvektoren 3 festgelegt, die alle erlaubten Bewegungsrichtungen des bewegten Bestandteils des Handhabungsgeräts 1 umfasst. Außerdem wird eine Menge verbotener Bewegungsvektoren festgelegt, die alle verbotenen Bewegungsrichtungen des bewegten Bestandteils des Handhabungsgeräts 1 umfasst. Die dargestellten Vektoren 7 zeigen Beispiele für zwei verbotene Bewegungsrichtungen.
3. Bestimmung, ob eine Bewegung in einer verbotenen Bewegungsrichtung vorliegt:
   Die Bewegung des bewegten Bestandteils des Handhabungsgeräts 1 wird gestoppt, wenn die Abweichung (Winkel 8) zwischen dem aktuellen Bewegungsvektor 4 und dem Referenzvektor 6 nicht im Bereich 5 der erlaubten Abweichung, sondern in dem verbotenen Abweichungsbereich zwischen 110 und 250° liegt.

Das schematisch in Figur 1 dargestellte Verfahren dient zur Sicherung des Handhabungsgeräts 1. Beispielsweise sollen Kollisionen mit einer Person 2 vermieden werden. Dies geschieht erfindungsgemäß durch das Überwachen der Bewegungsrichtung des bewegten Bestandteils des Handhabungsgeräts 1. Dazu wird zunächst der die aktuelle Bewegungsrichtung des bewegten Bestandteils darstellende Bewegungsvektor 4 ermittelt, der eine bestimmte Richtung aufweist und anschließend die Richtung des Bewegungsvektors 4 mit der Richtung des definierten Referenzvektors 6 zur Bestimmung der Abweichung verglichen. Der Referenzvektor 6 zeigt in dem dargestellten Beispiel in eine Richtung von der Sicherheitszone weg, in der sich die Person 2 aufhält. Als sicherheitsrelevante Funktion wird das Handhabungsgerät 1 und damit die Bewegung des bewegten Bestandteils gestoppt, wenn die Abweichung 8 in dem definierten verbotenen Bereich zwischen 110 und 250° liegt und sich der bewegte Bestandteil folglich auf die Sicherheitszone zubewegt, in der sich die Person 2 aufhält.

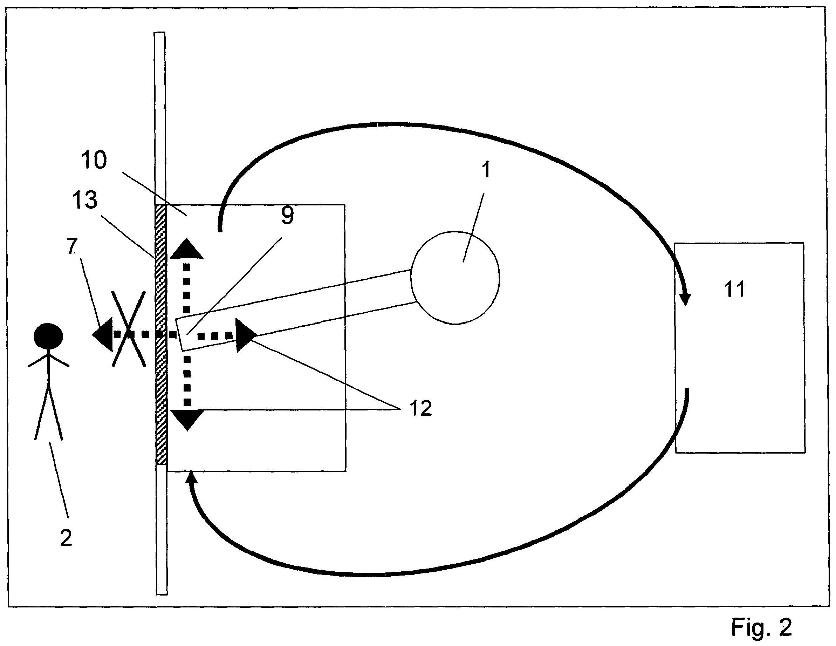

Figur 2 zeigt eine zweite Ausführungsform des erfindungsgemäßen Verfahrens. In dem in Figur 2 dargestellten Beispiel ist die Bewegungsrichtungsüberwachung daran gekoppelt, in welcher Zone der bewegte Bestandteil (zum Beispiel ein Werkzeug mit einem TCP 9 des Handhabungsgeräts 1) arbeitet. In Abhängigkeit von der Zone kann der TCP 9 nur in bestimmte Richtungen bewegt werden. Beispielsweise werden die TCP-Bewegungen nur in einer überwachten Zone 10, die sich in der Nähe einer Aufenthaltszone (Sicherheitszone) einer Person 2 befindet, auf Bewegungen limitiert, die von der Person 2 weg oder parallel zur Aufenthaltszone der Person 2 gerichtet sind.

Alternativ dazu soll der TCP 9 in Abhängigkeit von der Zone zum Beispiel nur mit einer geringen Geschwindigkeit (z.B. < 250 mm/s) in bestimmten Richtungen bewegt werden. Beispielsweise werden die TCP-Bewegungen nur in einer überwachten Zone 10, die sich in der Nähe einer Aufenthaltszone einer Person 2 befindet, auf Bewegungen mit einer geringen Geschwindigkeit limitiert, wenn die aktuelle Bewegungsrichtung auf die Person 2 zu gerichtet ist.

In beiden Fällen wird für die überwachte Zone 10 ein Bereich für die Abweichung des aktuellen Bewegungsvektors von einem Referenzvektor definiert, der die Bewegungsrichtungen des bewegten Bestandteils auf die Person 2 zu erfasst. Wenn die aktuelle Abweichung in diesem Bereich liegt, wird erfindungsgemäß die vorgesehene sicherheitsrelevante Funktion (Stoppen der zu der Person hin gerichteten Bewegung des bewegten Bestandteils oder Limitieren der Geschwindigkeit der zu der Person 2 hin gerichteten Bewegung des bewegten Bestandsteils) ausgelöst.

Wenn sich der bewegte Bestandteil außerhalb der überwachten Zone 10 befindet (zum Beispiel wenn das Handhabungsgerät an einer von der überwachten Zone 10 entfernten Arbeitsstation 11 arbeitet), erfolgt keine Überwachung der Bewegungsrichtung. Der bewegte Bestandteil des Handhabungsgeräts 1 (zum Beispiel einen Greifer) bewegt sich folglich in einem Arbeitsraum, der in Zonen eingeteilt wird (überwachte Zone 10/nicht überwachte Zone außerhalb der überwachten Zone 10), wobei die sicherheitsrelevante Funktion von der Zone abhängt, in der sich der bewegte Bestandteil befindet.

In Figur 2 sind beispielhaft "erlaubte" Bewegungsrichtungen 12 eingezeichnet, deren Abweichung von einem (nicht dargestellten) Referenzvektor keine sicherheitsrelevante Funktion auslöst. Ferner ist als Beispiel eine "verbotene" Bewegungsrichtung 7 eingezeichnet, die aufgrund ihrer Abweichung von dem Referenzvektor eine sicherheitsrelevante Funktion auslöst.

Die Bewegungsrichtungsüberwachung kann alternativ zu der in Figur 2 dargestellten Variante auch an die aktuelle Position des bewegten Bestandteils (zum Beispiel die Position des TCP 9) gekoppelt sein, das heißt an die kartesischen Koordinaten und damit unabhängig von Zonen. Dann können sich die erlaubten und verbotenen TCP-Bewegungsrichtungen in Abhängigkeit von der kartesischen TCP-Position ändern.

Eine weitere Möglichkeit ist das Koppeln der Abweichungsbereiche, in denen sicherheitsrelevante Funktionen ausgelöst werden, an die aktuelle Bewegungsgeschwindigkeit des bewegten Bestandteils. Dann können zum Beispiel bestimmte TCP-Bewegungsrichtungen nur mit bestimmten TCP-Geschwindigkeiten zugelassen werden. Weiterhin besteht die Möglichkeit, dass das Überwachen des bewegten Bestandteils nur dann erfolgt, wenn definierte Signale eines sicherheitsrelevanten Systems vorliegen. In Figur 2 ist beispielsweise ein Sicherheitsgatter 13 dargestellt. Eine Überwachung der Bewegungsrichtung des bewegten Bestandteils zum Schutz der Person 2 ist nur erforderlich, wenn das Sicherheitsgatter 13 geöffnet ist. Bei geschlossenem Sicherheitsgatter 13 empfängt das Handhabungsgerät bzw. eine dazugehörige Überwachungseinrichtung ein Signal, aufgrund dessen die Bewegungsrichtungsüberwachung abgeschaltet wird. Sobald sich das Sicherheitsgatter 13 öffnet, kann die Bewegungsrichtungsüberwachung aufgrund entsprechender Signale wieder aktiviert werden (gegebenenfalls in Abhängigkeit von der aktuellen Position des bewegten Bestandteils).

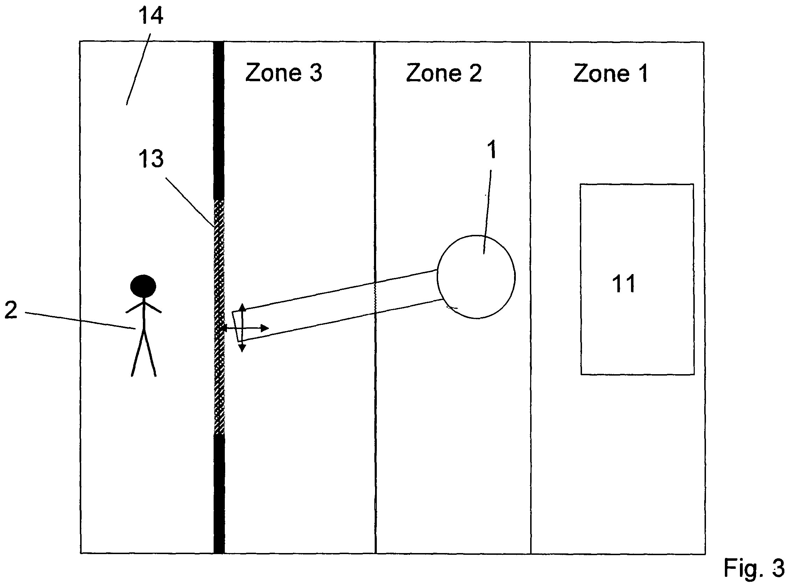

Figur 3 zeigt eine dritte Ausführungsform des erfindungsgemäßen Verfahrens.

In dem in Figur 3 dargestellten Beispiel ist der Arbeitsraum des Handhabungsgeräts 1 in drei Zonen unterteilt (Zone 3, Zone 2, Zone 1). Die erste Zone (Zone 1) ist am weitesten von der Aufenthaltszone der Person 2 (Sicherheitszone 14) entfernt, die erste Zone (Zone 1) liegt angrenzend an die Aufenthaltszone der Person 2 und die zweite Zone (Zone 2) liegt zwischen der ersten und der dritten Zone.

Die Bewegungsrichtungsüberwachung erfolgt gemäß der dargestellten Ausführungsvariante gekoppelt an die Zone in der sich der bewegte Bestandteil befindet (und damit an die Entfernung des bewegten Bestandteils von der Sicherheitszone 14) und an die Geschwindigkeit mit der sich der bewegte Bestandteil bewegt. Ferner hängt die Überwachung von dem Zustand (offen oder geschlossen) eines Sicherheitsgatters 13 ab.

Das Überwachen des bewegten Bestandteils (zum Beispiel eines Werkzeugs mit einem TCP 9) erfolgt beispielsweise nur, wenn sich der bewegte Bestandteil in der zweiten Zone oder der dritten Zone befindet.

Wenn sich der bewegte Bestandteil in der ersten Zone befindet, kann er ohne einen Eingriff durch das erfindungsgemäße Sicherungsverfahren Bewegungen in allen Richtungen auch mit hohen Geschwindigkeiten ausführen.

Wenn sich der bewegte Bestandteil in der zweiten Zone befindet, erfolgt ein Überwachen des bewegten Bestandteils nur wenn er eine Bewegung mit einer hohen Geschwindigkeit (zum Beispiel > 500 mm/s) ausführt. Für diesen Fall ist ein Bereich für die Abweichung des Bewegungsvektors von einem Referenzvektor, in dem eine sicherheitsrelevante Funktion ausgelöst wird, so definiert, dass die sicherheitsrelevante Funktion nur dann ausgelöst wird, wenn die Bewegungsrichtung des bewegten Bestandteils auf die Sicherheitszone 14 zu gerichtet ist. Beispielsweise wird dann nur eine parallel zu der Sicherheitszone 14 oder weg von der Sicherheitszone 14 gerichtete Bewegung nicht gestoppt oder nicht verzögert. Wenn die Bewegung in der zweiten Zone mit einer mittleren oder geringen Geschwindigkeit erfolgt, so wird keine sicherheitsrelevante Funktion ausgelöst (da keine Überwachung stattfindet bzw. kein entsprechender Abweichungsbereich definiert ist).

Wenn sich der bewegte Bestandteil in der dritten Zone bewegt, so erfolgt ein Überwachen des bewegten Bestandteils wenn er eine Bewegung mit einer hohen oder einer mittleren Geschwindigkeit (zum Beispiel > 250 mm/s) ausführt. Der Abweichungsbereich ist dann zum Beispiel so definiert, dass bei hoher Geschwindigkeit in jedem Fall eine sicherheitsrelevante Funktion ausgelöst wird (zum Beispiel Stoppen des Bestandteils) und bei einer mittleren Geschwindigkeit eine sicherheitsrelevante Funktion nur dann nicht ausgelöst wird, wenn die Bewegungsrichtung von der Sicherheitszone 14 weg weist.

Wenn die Bewegung in der dritten Zone mit einer geringen Geschwindigkeit erfolgt (zum Beispiel < 250 mm/s), so wird keine sicherheitsrelevante Funktion ausgelöst.

## Patentansprüche

1. Verfahren zur Sicherung eines Handhabungsgeräts, umfassend ein Überwachen einer Bewegungsrichtung eines bewegten Bestandteils des Handhabungsgeräts (1), umfassend die Schritte
• Ermitteln eines die aktuelle Bewegungsrichtung des bewegten Bestandteils darstellenden Bewegungsvektors (4), der eine bestimmte Richtung aufweist, und
• Vergleichen der Richtung des Bewegungsvektors (4) mit einer Richtung eines Referenzvektors (6) zur Bestimmung einer Abweichung (8),
wobei eine sicherheitsrelevante Funktion ausgelöst wird, wenn die Abweichung (8) außerhalb eines definierten Bereichs liegt, **dadurch gekennzeichnet, dass** der Referenzvektor in Abhängigkeit von mindestens einer der Größen, ausgewählt aus der Gruppe Position des bewegten Bestandteils, Geschwindigkeit des bewegten Bestandteils, Signale einer speicherprogrammierbaren Steuerung und Signale eines sicherheitsrelevanten Systems, definiert ist.

2. Verfahren gemäß Anspruch 1, **dadurch gekennzeichnet, dass** als sicherheitsrelevante Funktion ein Stoppen des bewegten Bestandteils, ein Einstellen oder ein Begrenzen der Geschwindigkeit des bewegten Bestandteils ausgelöst wird.

3. Verfahren gemäß einem der Ansprüche 1 oder 2, **dadurch gekennzeichnet, dass** der Bereich in Abhängigkeit von mindestens einer der Größen ausgewählt aus der Gruppe Position des bewegten Bestandteils, Geschwindigkeit des bewegten Bestandteils, Signale einer speicherprogrammierbaren Steuerung und Signale eines sicherheitsrelevanten Systems definiert ist.

4. Verfahren gemäß einem der Ansprüche 1 bis 3, **dadurch gekennzeichnet, dass** der Bewegungsvektor (4) aus zwei nacheinander bestimmten Positionswerten des bewegten Bestandteils des Handhabungsgeräts (1) ermittelt wird.

5. Verfahren gemäß einem der Ansprüche 1 bis 4, **dadurch gekennzeichnet, dass** eine Bewegung des bewegten Bestandteils gestoppt wird, wenn zwischen dem Bewegungsvektor (4) und dem Referenzvektor (6) ein Winkel vorliegt, der einen definierten Grenzwinkel überschreitet.

6. Verfahren gemäß Anspruch 5, **dadurch gekennzeichnet, dass** der Grenzwinkel als Funktion mindestens einer der Größen ausgewählt aus der Gruppe Position des bewegten Bestandteils, Geschwindigkeit des bewegten Bestandteils, Signale einer speicherprogrammierbaren Steuerung und Signale eines sicherheitsrelevanten Systems definiert ist.

7. Verfahren gemäß einem der Ansprüche 1 bis 6, **dadurch gekennzeichnet, dass** mehrere Bereiche für die Abweichung definiert sind, wobei als sicherheitsrelevante Funktion eine Geschwindigkeit des bewegten Bestandteils in Abhängigkeit von dem Bereich, in dem die Abweichung liegt, eingestellt oder begrenzt wird.

8. Verfahren gemäß einem der Ansprüche 1 bis 7, **dadurch gekennzeichnet, dass** sich der bewegte Bestandteil in einem Arbeitsraum bewegt, der in Zonen eingeteilt ist, wobei die sicherheitsrelevante Funktion von der Zone abhängt, in der sich der bewegte Bestandteil befindet.

9. Verfahren gemäß Anspruch 8, **dadurch gekennzeichnet, dass** in einer an eine Sicherheitszone (14) angrenzenden Zone eine Bewegung des bewegten Bestandteils
• mit hoher Geschwindigkeit gestoppt wird,
• mit einer mittleren Geschwindigkeit gestoppt wird außer wenn sich der bewegte Bestandteil in einer Bewegungsrichtung von der Sicherheitszone (14) weg bewegt und
• mit einer niedrigen Geschwindigkeit in allen Bewegungsrichtungen zugelassen wird.

10. Verfahren gemäß einem der Ansprüche 8 oder 9, **dadurch gekennzeichnet, dass** in einer Zone eine Bewegung des bewegten Bestandteils
• mit einer hohen Geschwindigkeit gestoppt wird, außer wenn sich der bewegte Bestandteil in einer Bewegungsrichtung parallel zu einer Sicherheitszone (14) bewegt oder von einer Sicherheitszone (14) weg bewegt und
• mit einer mittleren oder niedrigen Geschwindigkeit in allen Bewegungsrichtungen zugelassen wird.

11. Verfahren gemäß einem der Ansprüche 1 bis 10, **dadurch gekennzeichnet, dass** sich der bewegte Bestandteil in einem Arbeitsraum bewegt, der in Zonen eingeteilt wird, wobei das Überwachen der Bewegungsrichtung des bewegten Bestandteils nur erfolgt, wenn sich der Bestandteil in einer oder mehreren bestimmten Zonen (10) befindet.

12. Verfahren gemäß einem der Ansprüche 1 bis 11, **dadurch gekennzeichnet, dass** das Überwachen des bewegten Bestandteils nur erfolgt, wenn sich der bewegte Bestandteil an definierten Positionen befindet oder definierte Geschwindigkeiten aufweist oder wenn definierte Signale einer speicherprogrammierbaren Steuerung oder eines sicherheitsrelevanten Systems vorliegen.

## Claims

1. Method for protecting a handling device, comprising monitoring a direction of movement of a moving part of the handling device (1), comprising the steps of
• determining a movement vector (4) which represents the current direction of movement of the moving part and has a particular direction, and
• comparing the direction of the movement vector (4) with a direction of a reference vector (6) in order to determine a discrepancy (8),
wherein a safety-relevant function is initiated if the discrepancy (8) is outside a defined range, **characterized in that** the reference vector is defined on the basis of at least one of the variables selected from the group of the position of the moving part, speed of the moving part, signals from a programmable logic controller and signals from a safety-relevant system.

2. Method according to Claim 1, **characterized in that** stopping of the moving part, adjustment or limitation of the speed of the moving part is initiated as a safety-relevant function.

3. Method according to either of Claims 1 and 2, **characterized in that** the range is defined on the basis of at least one of the variables selected from the group of the position of the moving part, speed of the moving part, signals from a programmable logic controller and signals from a safety-relevant system.

4. Method according to one of Claims 1 to 3, **characterized in that** the movement vector (4) is determined from two position values of the moving part of the handling device (1) which are determined in succession.

5. Method according to one of Claims 1 to 4, **characterized in that** a movement of the moving part is stopped if an angle which exceeds a defined limit angle is present between the movement vector (4) and the reference vector (6).

6. Method according to Claim 5, **characterized in that** the limit angle is defined as a function of at least one of the variables selected from the group of the position of the moving part, speed of the moving part, signals from a programmable logic controller and signals from a safety-relevant system.

7. Method according to one of Claims 1 to 6, **characterized in that** a plurality of ranges are defined for the discrepancy, wherein a speed of the moving part is adjusted or limited on the basis of the range in which the discrepancy lies as a safety-relevant function.

8. Method according to one of Claims 1 to 7, **characterized in that** the moving part moves in a working area which is divided into zones, wherein the safety-relevant function depends on the zone in which the moving part is situated.

9. Method according to Claim 8, **characterized in that**, in a zone adjacent to a safety zone (14), a movement of the moving part
• at a high speed is stopped,
• at a medium speed is stopped except if the moving part is moving in a direction of movement away from the safety zone (14), and
• at a low speed is allowed in all directions of movement.

10. Method according to either of Claims 8 and 9, **characterized in that**, in a zone, a movement of the moving part
• at a high speed is stopped except if the moving part is moving in a direction of movement parallel to a safety zone (14) or is moving away from a safety zone (14), and
• at a medium or low speed is allowed in all directions of movement.

11. Method according to one of Claims 1 to 10, **characterized in that** the moving part moves in a working area which is divided into zones, wherein the direction of movement of the moving part is monitored only when the part is in one or more particular zones (10).

12. Method according to one of Claims 1 to 11, **characterized in that** the moving part is monitored only when the moving part is at defined positions or has defined speeds or if defined signals from a programmable logic controller or from a safety-relevant system are present.

## Revendications

1. Procédé de sécurisation d'un appareil de manutention, comprenant la surveillance d'une direction de déplacement d'un composant déplacé de l'appareil de manutention (1), le procédé comprenant les étapes suivantes
• déterminer un vecteur de déplacement (4) qui représente la direction de déplacement actuelle du composant déplacé et qui présente une direction déterminée, et
• comparer la direction du vecteur de déplacement (4) avec la direction d'un vecteur de référence (6) pour déterminer un écart (8).
une fonction de sécurité étant déclenchée si l'écart (8) se situe en dehors d'une zone définie, **caractérisé en ce que** le vecteur de référence est défini en fonction d'au moins une des grandeurs choisies dans le groupe comportant la position du composant déplacé, la vitesse du composant déplacé, des signaux d'une commande à mémoire programmable et des signaux d'un système de sécurité.

2. Procédé selon la revendication 1, **caractérisé en ce qu'**on déclenche, en tant que fonction de sécurité, un arrêt du composant déplacé, un réglage ou une limitation de la vitesse du composant déplacé.

3. Procédé selon l'une des revendications 1 ou 2, **caractérisé en ce que** la zone est définie en fonction d'au moins une des grandeurs choisies dans le groupe constitué de la position du composant déplacé, de la vitesse du composant déplacé, de signaux d'une commande à mémoire programmable et de signaux d'un système de sécurité.

4. Procédé selon l'une des revendications 1 à 3, **caractérisé en ce que** le vecteur de déplacement (4) est déterminé à partir de deux valeurs de position déterminées successivement du composant déplacé de l'appareil de manutention (1).

5. Procédé selon l'une des revendications 1 à 4, **caractérisé en ce qu'**un déplacement du composant déplacé est arrêté s'il y a entre le vecteur de déplacement (4) et le vecteur de référence (6) un angle supérieur à un angle limite défini.

6. Procédé selon la revendication 5, **caractérisé en ce que** l'angle limite est défini en fonction d'au moins une des grandeurs choisies dans la groupe comportant la position du composant déplacé, la vitesse du composant déplacé, des signaux d'une commande à mémoire programmable et des signaux d'un système de sécurité.

7. Procédé selon l'une des revendications 1 à 6, **caractérisé en ce qu'**une pluralité de zones sont définies pour l'écart, une vitesse du composant déplacé comme fonction de sécurité étant réglée ou limitée en fonction de la zone dans laquelle se trouve l'écart.

8. Procédé selon l'une des revendications 1 à 7, **caractérisé en ce que** le composant déplacé se déplace dans un espace de travail qui est divisé en zones, la fonction de sécurité dépendant de la zone dans laquelle se trouve le composant déplacé.

9. Procédé selon la revendication 8, **caractérisé en ce que**, dans une zone adjacente à une zone de sécurité (14), un déplacement du composant déplacé
• est arrêté à haute vitesse,
• est arrêté à une vitesse moyenne à moins que le composant déplacé ne s'écarte de la zone de sécurité (14) dans une direction de déplacement et
• est autorisé dans toutes les directions de déplacement à basse vitesse.

10. Procédé selon l'une des revendications 8 ou 9, **caractérisé en ce que**, dans une zone, un déplacement du composant déplacé
• est arrêté à grande vitesse à moins que le composant déplacé ne se déplace dans une direction de déplacement parallèle à une zone de sécurité (14) ou ne s'écarte d'une zone de sécurité (14) et
• est autorisé dans toutes les directions de déplacement à vitesse moyenne ou faible.

11. Procédé selon l'une des revendications 1 à 10, **caractérisé en ce que** le composant déplacé se déplace dans un espace de travail qui est divisé en zones, la surveillance de la direction de déplacement du composant déplacé n'étant effectuée que si le composant se trouve dans au moins une zone (10) définie.

12. Procédé selon l'une des revendications 1 à 11, **caractérisé en ce que** la surveillance du composant déplacé n'est effectuée que si le composant déplacé se trouve à des positions définies ou a des vitesses définies ou si des signaux définis d'une commande à mémoire programmable ou d'un système de sécurité sont présents.
